(19) **Europäisches Patentamt**

**European Patent Office**

**Office européen des brevets**

(11) **EP 0 567 883 B1**

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int. Cl.$^6$: **B32B 27/08**, B32B 25/08, F25D 23/06

(21) Anmeldenummer: **93106308.5**

(22) Anmeldetag: **19.04.1993**

(54) **Verbundformkörper**

Shaped composite

Composite façonné

(84) Benannte Vertragsstaaten:
**DE FR GB IT**

(30) Priorität: **30.04.1992 DE 4214192**

(43) Veröffentlichungstag der Anmeldung:
**03.11.1993 Patentblatt 1993/44**

(73) Patentinhaber: **BAYER AG**
**51368 Leverkusen (DE)**

(72) Erfinder:
- **Eisen, Norbert, Dr.**
  **W-5000 Köln 41 (DE)**
- **Staratschek, Harry, Dipl.-Ing.**
  **W-5068 Odenthal (DE)**
- **Vogl, Herbert, Dipl.-Ing.**
  **W-5000 Köln 60 (DE)**

(56) Entgegenhaltungen:
EP-A- 0 243 911          DE-A- 4 022 741
FR-A- 2 445 223          US-A- 5 149 589

- Derwent Publications Ltd., London, GB; AN 91-054636 (08)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gegenstand der Erfindung sind Verbundformkörper aus mindestens einer Schicht aus einem ABS-Kunststoff und mindestens einer Schicht aus einem thermoplastischen Polyurethan (TPU) mit einer Shore-D-Härte von >50, bevorzugt von 55 bis 75, wobei zwischen der ABS- und der thermoplastischen Polyurethanschicht eine Haftvermittlerschicht vorhanden sein kann, die ihrerseits bevorzugt aus einem thermoplastischen Polyurethan (TPU) mit einer Shore-D-Härte <50, bevorzugt von 45 bis 30 besteht. Die erfindungsgemäßen Formkörper sind bevorzugt flächige Laminate, die Direktkontakt mit Polyurethan-Schaumstoffen haben können, z.B. handelt es sich um Verbundfolien mit dem Aufbau ABS-TPU oder TPU-ABS-TPU oder ABS-Haftvermittler-TPU oder TPU-Haftvermittler-ABS-Haftvermittler-TPU.

Die erfindungsgemäßen Verbundkörper besitzen wegen ihrer TPU-Außenschicht besondere Beständigkeit gegen Chemikalien. Insbesondere sind sie beständig gegen teilhalogenierte, insbesondere teilfluorierte Kohlenwasserstoffe, insbesondere 1,1-Dichlor-2,2,2-trifluorethan und 1,1-Dichlor-1-fluorethan. In der Form als flächige Laminate können die erfindungsgemäßen Produkte durch Tiefziehen verformt werden.

ABS-Kunststoffe im Sinne dieser Erfindung sind z.B. Produkte der Pfropfpolymerisation harzbildender Monomerer, insbesondere Styrol, Acrylnitril, Methylmethacrylat und Mischungen daraus, auf einen Kautschuk, insbesondere Polybutadien und Butadien-Styrol-Copolymerisate sowie Mischungen der Pfropfprodukte mit thermoplastischen Harzen wie Copolymerisaten von Styrol und Acrylnitril, Copolymerisaten von $\alpha$-Methylstyrol und Acrylnitril und Terpolymerisaten aus Styrol, $\alpha$-Methylstyrol und Acrylnitril. Es sollen also hier unter der Bezeichnung ABS nicht nur Acrylnitril-Butadien-Styrol-Copolymerisate im engeren Sinn verstanden werden, sondern auch Methylmethacrylat, $\alpha$-Methylstyrol und andere Kautschuke einbezogen sein.

Bevorzugt eingesetzte ABS-Kunststoffe sind Zweiphasenkunststoffe aus

1. einem thermoplastischen Copolymerisat aus Styrol und Acrylnitril, in dem das Styrol ganz oder teilweise durch $\alpha$-Methylstyrol oder Methylmethacrylat ersetzt sein kann; dieses Copolymerisat, auch als SAN-Harz oder Matrix-Harz bezeichnet, bildet die äußere Phase;

2. mindestens einem Pfropfpolymerisat, welches hergestellt worden ist durch Pfropfpolymerisation eines oder mehrer der unter 1. genannten Monomeren auf ein Butandienhomo- oder -copolymerisat ('Pfropfgrundlage'). Dieses Pfropfpolymerisat ('Elastomerphase' oder 'Pfropfkautschuk') bildet die disperse Phase im Matrixharz.

Die unter 1. und 2. genannten Polymerisate können nach bekannten Verfahren wie Emulsions-, Lösungs-, Masse-, Suspensions- oder Fällungspolymerisation oder durch Kombination solcher Verfahren hergestellt werden.

Für die Extrusion besonders geeignete ABS-Kunststoffe bestehen aus einem Styrol/Acrylnitril (SAN)-Copolymerisat (72 Gew.-% Styrol, 28 Gew.-% Acrylnitril) mit einem Molekulargewicht $\overline{M}_w$ (Gewichtsmittel) von ca. 120.000 mit einer molekularen Uneinheitlichkeit

$$\frac{\overline{M}_n}{\overline{M}_w} - 1 \leq 2$$

als Matrixharz ($\overline{M}_n$ = Zahlenmittel des Molekulargewichts, $\overline{M}_w$ = Gewichtsmittel des Molekulargewichts) und einem Pfropfkautschuk, bestehend aus 50 Gew.-Teilen Polybutadien mit einem mittleren Teilchendurchmesser ($d_{50}$) von 0,1 bis 0,4 μm, auf das 36 Gew.-Teile Styrol und 14 Gew.-Teile Acrylnitril aufgepfropft polymerisiert wurden. Das Mischungsverhältnis von Styrol-Acrylnitril-Copolymerisat und Pfropfkautschuk ist bevorzugt 40-80 : 60-20 (bezogen auf Gewicht), insbesondere 60:40.

Thermoplastische Polyurethane (als Deckschicht) können z.B durch Umsetzung von

a) organischen Diisocyanaten,

b) im wesentlichen difunktionellen Polyhydroxylverbindungen mit Molekulargewichten von 500 bis 8000, vorzugsweise 1000 bis 4000, und

c) Kettenverlängerungsmitteln mit Molekulargewichten von 60 bis 400, gegebenenfalls in Gegenwart von

d) Katalysatoren

hergestellt werden. Solche thermoplastische Polyurethane (TPU) sind beispielsweise aus der EP-PS 134 55 bekannt.

Bevorzugte organische Diisocyanate a) für die Herstellung der TPU's sind beispielsweise aliphatische, cycloaliphatische und vorzugsweise aromatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte, flüssige 4,4'- und/oder 2,4'-Diphenylmethan-diisocyanate, 4,4'-Disocyanate-diphenylethan-(1,2) und 1,5-Naphthylen-diisocyanat. Vorzugsweise verwendet werden 1,6-Hexamethylen-diisocyanat, Isophoron-diisocyanat, Diphenylmethan-diisocyanat-Isomerengemische mit einem 4,4'-Diphenylmethan-diisocyanatgehalte von größer als 96 Gew.-% und insbesondere 4,4'-Diphenyl-methan-diisocyanat.

Bevorzugte höhermolekulare Polyhydroxylverbin-dungen b) für die Herstellung der TPU sind vorzugsweise lineare Polyetherdiole und Polyesterdiole oder schwachverzweigte Polyhydroxylverbindungen einer Funktionalität von über 2 bis 3; aber auch ander hydro-xylgruppenhaltige Polymere, beispielsweise Polyace-tale, wie wasserunlösliche Formale, z.B. Polybutandiolformal und Polyhexandiolformal und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherpolyole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermoleküle kommen beispielsweise in Betracht: Wasser, Aminoalkohole wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherpolyole sind ferner die hydroxylgruppenhaltigen Polymerisationsprodukte des Tetrahydrofurans.

Vorzugweise verwendet werden Polytetramethylenetherdiole und Polyetherdiole aus Propylenoxid-1,2 und Ethylenoxid, in denen mehr als 50 %, vorzugsweise 60 bis 80 %, der OH-Gruppen primäre Hydroxylgruppen sind und bei denen zumindest ein Teil des Ethylenoxids als endständiger Block angeordnet ist.

Solche Polyetherpolyole können erhalten werden, indem man z.B. an das Startermolekül zunächst das Propylenoxid-1,2 und daran anschließend das Ehylenoxid addiert oder zunächst das gesamte Propylenoxid-1,2 im Gemisch mit einem Teil des Ethylenoxids addiert und den Rest des Ethylenoxids anschließend addiert oder schrittweise zunächst einen Teil des Ethylenoxids, dann das gesamte Propylenoxid-1,2 und dann den Rest des Ethylenoxids an das Startermolekül addiert.

Die im wesentlichen linearen Polyetherpolyole besitzen Molekulargewichte von 500 bis 8000, vorzugsweise 600 bis 6000 und insbesondere 1000 bis 40000. Sie können sowohl einzeln als auch in Form von Mischungen untereinander zur Anwendung kommen.

Geeignete Polyesterpolyole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicar-bonsäuren wie Bernsteinsäure, Glutarsäure, Adipin-säure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z. B. in Form einer Bernstein-, Glutar- und Adipinsäuremischung verwendet werden. Zur Herstellung der Polyesterpolyole kann es gegebenenfalls vorteilhaft sein, anstelle der Dicarbonsäuren die entsprechenden Dicarbonsäurederivate wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen wie Ethylenglykol, Diethylenglykol, Butandiol-1,4, Pentadiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen wie Butandiol-1,4 und/oder Hexan-diol-1,6, Kondensationsprodukte von ω-Hydroxycarbonsäuren, beispielsweise ω-Hydroxycapronsäure und vorzugsweise Polyadditionsprodukte von Latonen, beispielsweise gegebenenfalls substituierten ε-Caprolactonen.

Als Polyesterpolyole vorzugsweise verwendet werden Ethandiol-polyadipate, 1,4-Butandiol-polyadipate, Ethandiol-buandiol-1,4-polyadipate, 1,6-Hexandiol-neopentylglykol-polydadipate, 1,6-Hexandiol-1,4-butandiolpolyadipate und Polycaprolactone.

Die Polyesterpolyole besitzen Molekulargewichte von 500 bis 6000, vorzugsweise von 1000 bis 4000.

Bevorzugte Kettenverlängerungsmittel c) für die Herstellung der TPU sind vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4. Geeignet sind jedoch auch Diester der Terephthalsäure mit Glykolen mit 2 bis 4 Kohlenstoffatomen wie z.B. Terephthalsäure-bis-ethylenglykol oder -butandiol-1,4, Hydroxyalkylenether des Hydrochinons wie z.B. 1,4-Di-(β-hydroxyethyl)-hydrochinon, (cyclo)-aliphatische Diamine wie z.B. Isophoron-diamin, Ethylen-diamin, 1,2-, 1,3-Propylen-diamin, N-Methylpropylendiamin-1,3, N,N'-Dimethyl-ethylen-diamin und aromatische Diamine wie z.B. 2,4- und 2,6-Toluylen-diamin, 3,5-Diethyl-2,4- und/oder - 2,6-toluylen-diamin und primäre ortho-, di-, tri- und/oder tetraalkylsubstituierte 4,4'-Diaminodiphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:4,4, wobei die Härte und der Schmelzpunkt der TPU mit zunehmendem Gehalt an Diolen ansteigen.

Zur Herstellung der TPU werden die Aufbaukomponenten (a), (b) und (c) gegebenenfalls in Gegenwart von Katalysatoren (d) in solchen Mengen zur Reaktion gebracht, das das Äquivalenzverhältnis von NCO-Gruppen der Diisocyanate zur Summe der Hydroxygruppen oder Hydroxyl- und Aminogruppen der Komponenten (b) und (c) 1:0,85 bis 1,20, vorzugsweise 1:0,95 bis 1:1,05 und insbesondere ungefähr 1:1,02 beträgt.

Die Umsetzung der Komponenten (a), (b) und (c) kann in einer Einstufenreaktion oder über die Stufe von NCO-Prepolymeren aus höhermolekularen Polyhydroxylverbindungen (b) und überschüssigem Diisocyanat (a) und Weiterverarbeitung der so erhaltenen NCO-Prepolymeren mit Diisocyanat (a) und Kettenverlängerungsmittel (c) erfolgen.

Bevorzugte Katalysatoren (d), die gegebenenfalls zur Herstellung der TPU eingestellt werden, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine wie z.B. Triethylamin, Dimethylcyclohexylamin, N-Methylmorpholin, N,N'-Dimethylpiperazin, 2-(Dimethylmainoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die zinndialkylsalze aliphatische Carbonsäure wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindungen eingesetzt.

Diese thermoplastischen Polyurethane müssen eine Shore-D-Härte von >50, bevorzugt 55 bis 75 aufweisen.

Haftvermittler sind in manchen Fällen notwendig, weil Schichten aus ABS-Kunststoffen und Schichten aus den thermoplastischen Polyurethanen mit Shore-D-Härte >50 nicht zuverlässig aneinander haften. Man kann als Haftvermittler ebenfalls thermoplastische Polyurethane verwenden. Sie müssen dann aber eine Shore-D-Härte von <50, bevorzugt von 45D bis 30D besitzen. Beispiele hierfür sind: Polyadditionsprodukte aus 4,4'-Diphenylmethan-diisocyanat einem Butylenglycoladipat und Vernetzer 1,4-Butandiol und Polyadditionsprodukte aus 4,4-Diphenylmethan-diisocyanat einem $C_4$-Ether (Polytetramethylenglycol) und Vernetzer 1,4-Butandiol.

Die erfindungsgemäßen Verbundformkörper sind besonders bevorzugt flächige Laminate aus ABS und aus TPU-Folien. Dabei haben die ABS-Schichten bevorzugt eine Dicke von 1 mm bis 3 mm und die TPU-Schichten eine Dicke von 0,1 mm bis 0,5 mm. Die gegebenenfalls zwischen einer ABS und einer TPU-Schicht aufgebrachte Haftvermittlerschicht ist im allgemeinen dünner, beispielsweise hat sie eine Dicke von 0,02 mm bis 0,2 mm.

Die erfindungsgemäßen Verbundformkörper, insbesondere die erfindungsgemäßen flächenartigen Laminate oder Verbundfolien können wie folgt hergestellt werden:

a) Durch Mehrschicht-Co-Extrusion, wobei sowohl Mehrschichtdüsen als auch Mehrschicht-Adapter (Black Box-System) sowie Kombination aus beiden eingesetzt werden können.

b) Kaschierung einer TPU-Folie oder mehrerer TPU-Folien auf ABS-Schmelze.
Der Haftvermitter kann auf das ABS aufgebracht werden, z.B. bevorzugt durch Co-Extrusion oder kann in einem vorherigen Arbeitsgang schon auf die TPU-Folie aufgebracht worden sein, z.B. bevorzugt durch Co-Extrusion.

c) Die Folien (z.B. aus 3b) können auch mittels Thermokaschierung und/oder Flammenkaschierung mit dem ABS-Träger verbunden werden.

Bevorzugt ist die Schichtenfolge TPU-ABS oder TPU-ABS-TPU (wobei die gegebenenfalls vorhandenen Haftvermittlerschichten nicht berücksichtigt sind).

Hervorragendes Merkmal dieser Verbundkörper ist ihre chemische Beständigkeit, ihre leichte Verarbeitbarkeit durch Tiefziehen und ihre Fähigkeit zur Verbindung mit weiteren Schichten. Ein Beispiel für ihre Anwendung ist die Herstellung von Kühlschrankinnenbehältern. Man kann die erfindungsgemäße Verbundfolie zunächst durch Tiefziehen in die gewünschte Form bringen und dann mit Polyurethanschaum ausschäumen, wobei der Polyurethanschaum auf der TPU-Seite angebracht wird. Es entsteht dabei eine besonders gute Verbindung zwischen diesem Schaum und der ja ebenfalls aus Polyurethan bestehenden Oberfläche. Die bei der direkten Beschichtung von ABS mit TPU-Schaum häufig beobachtete Korrosion des ABS (Spannungsrißbildung) wird hier völlig vermieden.

### Ausführungsbeispiele

Die Platten wurden mit einer Coextrusionsanlage aus drei Extrudern und einem Coextrusionsadapter mit Breitschlitzdüse hergestellt.

Es wurde ein ABS-Kunststoff verwendet, bestehend aus einem Styrol/Acrylnitril (SAN)-Copolymerisat (72 Gew.-% Styrol, 28 Gew.-% Acrylnitril) mit einem Molekulargewicht $M_w$ (Gewichtsmittel) von ca. 120 000 mit einer molekularen Uneinheitlichkeit

$$\frac{M_n}{M_w} = -1 \leq 2$$

als Matrixharz ($M_n$ = Zahlenmittel des Molekulargewichts, $M_w$ = Gewichtsmittel des Molekulargewichts) und einem Pfropfkautschuk, bestehend aus 50 Gew.-Teilen Polybutadien mit einem mittleren Teilchendurchmesser ($d_{50}$) von 0,4 μm, auf das 36 Gew.-Teile Styrol und 14 Gew.-Teile Acrylnitril pfropfpolymerisiert wurden. Das Mischungsverhältnis von Styrol-Acrylnitril-Copolymerisat und Pfropfkautschuk ist (bezogen auf Gewicht), 60:40.

Als Haftvermittler wurde ein TPU verwendet, aufgebaut aus 100 Gew.-Teilen Polytetramethylenglycol mit dem Molekulargewicht 2 000, 50 Gew.-Teilen 4,4-Diphenylmethan-Diisocyanat und 9 Gew.-Teilen Butandiol-1,4 als Vernetzer.

Als Deckschicht wurde ein TPU aufgebracht, aufgebaut aus einer Mischung von 50 Gew.-Teilen Polytetramethylenglycol (Molekulargewicht 1 000) und 50 Gew.-Teilen Polytetramethylenglycol (Molekulargewicht 2 000), 141 Gew.-Teilen 4,4-Diphenylmethan-Diisocyanat und 40 Gew.-Teilen Butandiol 1,4 als Vernetzer.

Der erhaltene Verbundkörper hatte eine Gesamtdicke von 2 mm, wobei die TPU-Schicht 0,2 mm dick und die Haftvermittlerschicht 0,05 mm dick war. Die Plattenbreite betrug 700 mm.

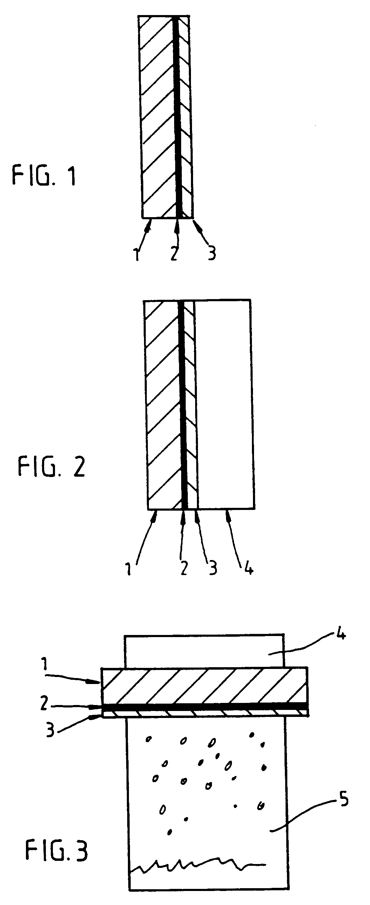

Die Figur 1 zeigt diesen Verbundkörper. Es bedeuten 1 die ABS-Schicht, 2 die Haftvermittlerschicht, 3 die TPU-Schicht.

Das Laminat wurde nach Aufheizen (ca. 180°C) zu einem kastenförmigen Behälter über einen Kern tiefgezogen. Die Innenseit des Kastens war TPU.

Prüfung der Formkörper

  1. Ausschäumen mit PU-Schaum
        Der solcher Art hergestellte Verbundkörper wurde, wie es in der Kühlschrankindustrie üblich ist, mit einem Polyurethan-Schaum hinterschäumt und der Verbundkörper gemäß Figur 2 erhalten, in dem 1-3 wie oben definiert sind und 4 die Polyurethan-Schicht bedeutet.

  2. Direktkondensation von 1,1-Dichlor-2,2,2-trifluorethan an die TPU-Seite des Laminats wird in Figur 3 gezeigt. 1-3 haben die Bedeutung wie oben, 4 ist eine Eisschicht, 5 das kondensierte 1,2-Dichlor-2,2,2-trifluorethan.
        Nach 5 Stunden wurde der Versuch abgebrochen. Es war keine Schädigung der Oberfläche zu erkennen.
        Standard-ABS zeigt schon nach wenigen Minuten im gleichen Test Spannungsrisse, Blasen bis hin zur Auflösung.

## Patentansprüche

1.  Verbundformkörper aus mindestens einer Schicht aus einem ABS-Kunststoff und mindestens einer Schicht aus einem thermoplastischen Polyurethan mit einer Shore-D-Härte von >50, wobei zwischen der ABS und der thermoplastischen Polyurethanschicht eine Haftvermittlerschicht vorhanden sein kann.

2.  Verbundformkörper nach Anspruch 1, worin die Haftvermittlerschicht aus einem thermoplastischen Polyurethan mit einer Shore-D-Härte <50 besteht.

3.  Verbundformkörper nach Anspruch 1 in Form einer Verbundfolie.

4.  Verwendung der Verbundfolie nach Anspruch 3 zur Herstellung von Kühlschrankinnenbehältern unter Beschichtung mit Polyurethanschaum.

## Claims

1.  Composite mouldings consisting of at least one layer of an ABS plastic and at least one layer of a thermoplastic polyurethane having a Shore D hardness of > 50, wherein a coupling agent layer may be present between the ABS and the thermoplastic polyurethane layer.

2.  Composite mouldings according to claim 1, in which the coupling agent layer consists of a thermoplastic polyurethane having a Shore D hardness of < 50.

3.  Composite mouldings according to claim 1 in the form of a composite film.

4.  Use of the composite film according to claim 3 for the production of refrigerator liners coated with polyurethane foam.

## Revendications

1.  Corps moulé composite consistant en au moins une couche d'une résine synthétique ABS et au moins une couche d'un polyuréthane thermoplastique ayant une dureté Shore D supérieure à 50 avec le cas échéant une couche d'agent d'adhérence entre la couche d'ABS et la couche de polyuréthane thermoplastique.

2.  Corps moulé composite selon la revendication 1, pour lequel la couche d'agent d'adhérence consiste en un polyuréthane thermoplastique ayant une dureté Shore D inférieure à 50.

3.  Corps moulé composite selon la revendication 1, à l'état de feuille composite.

4. Utilisation de la feuille composite selon la revendication 3, pour la fabrication de logements intérieurs de réfrigérateurs, avec revêtement d'une mousse de polyuréthane.

FIG. 1

FIG. 2

FIG. 3